# EUROPEAN PATENT APPLICATION

(11) **EP 4 389 417 A1**
(43) Date of publication of application: **26.06.2024**
(21) Application number: 22928050.8
(22) Date of filing: 18.05.2022
(51) Int. Cl.: B32B 27/00, C09J 7/29, C08J 5/18, C08L 75/04, C08K 9/06, C08K 3/36, C08K 3/22, C08K 5/37

(54) **POLYURETHANE MULTILAYER FILM AND PREPARATION METHOD THEREFOR**

(30) Priority: 26.02.2022 CN 202210200482
(71) Applicant: Zhejiang Shichuang Optics Film Manufacturing Co. Ltd, Jiaxing, Zhejiang 314000 (CN)
(72) Inventor: ZHANG, Hongsheng, Jiaxing, Zhejiang 314000 (CN)
(74) Representative: Santoro, Sofia
(86) International application number: PCT/CN2022/093690
(87) International publication number: WO 2023/159779

(57) **Abstract**

This invention discloses a polyurethane multilayer film and its preparation method. The preparation method comprises the following steps: applying a flexible polyurethane coating solution onto the surface of a polyethylene terephthalate (PET) film, drying to form a flexible polyurethane film coating, and then subjecting it to plasma discharge treatment; applying a pressure-sensitive adhesive solution onto the surface of the flexible polyurethane film coating to form a pressure-sensitive adhesive layer; applying another flexible polyurethane coating solution onto the surface of another PET film, drying to form a flexible polyurethane film coating, subjecting it to plasma discharge treatment, and then combining it with the pressure-sensitive adhesive layer; peeling off the two PET films, coating the surface of one side of the flexible polyurethane film coating with a coating containing thermal insulation nanomaterials, and baking-curing; coating the surface of the other side of the flexible polyurethane film coating with a pressure-sensitive adhesive solution. The sandwich structure of this invention is used to replace traditional TPU base films, thereby avoiding the issue of poor leveling in TPU base films prepared by the casting method.

## Description

### Technical Field

The present invention relates to the field of film preparation, particularly to a polyurethane multilayer film and its preparation method.

### Backgroud Art

Currently, there are many types of automotive paint protection films available on the market, with the majority using a common PVC (Polyvinyl Chloride) adhesive film applied to the car's paint surface to protect it from external abrasion damage. However, due to the migration of plasticizers within the PVC base film over time, PVC protective films tend to become progressively harder and more brittle in later use. Additionally, the migration of plasticizers to the adhesive layer reduces the adhesive strength, leading to issues such as scratches, bubbling, and peeling, which are aesthetically displeasing. Therefore, there is a gradual shift towards using thermoplastic polyurethane elastomer-based films as automotive paint protection films.

Furthermore, because thermoplastic polyurethane elastomer base films have a cushioning effect against impact, they are not only used as automotive paint protection films but are also gradually replacing existing PET automotive glass thermal insulation films. This allows for thermal insulation while providing resistance against impact and scratches.

However, one issue with the application of existing TPU thermal insulation films on the front windshield of cars is that conventional TPU (thermoplastic polyurethane elastomer rubber) base films are typically produced using an extrusion method under high-temperature conditions (120-200 degrees). The TPU particles are melted, extruded, and then cooled to obtain the base film. Due to the generally high viscosity of TPU melt, the flow properties of the TPU base film obtained through extrusion are poor, resulting in a higher microscopic roughness on the surface of the final TPU film. When applied to the front windshield, which is inclined, and viewed at a sharp angle, the light scattering caused by the surface roughness of the TPU film affects visibility. Therefore, there is a need for a self-healing thermal insulation film with superior flow properties.

### Summary Disclosure

This invention relates to a polyurethane multilayer film and its preparation method.

The invention employs a coating method using a sandwich structure of flexible PU coating/pressure-sensitive adhesive/flexible PU coating to replace the traditional TPU base film, thereby avoiding the issue of poor leveling of TPU base films prepared by the extrusion method.

The inventors, through research, found that by directly using a flexible polyurethane coating solution to form a flexible polyurethane coating and then subjecting the film layer to plasma discharge treatment, the inclusion of carboxylic acid silane-modified nano silica and 8-mercapto-1-octanol in the flexible polyurethane coating not only enhances the bonding strength of each layer of the film but also effectively prevents the adverse effects of light scattering from film particle, resulting in superior leveling performance of the film.

The present invention provides a method of preparing a polyurethane multilayer film, comprising the following steps:
(1) applying a flexible polyurethane coating solution onto the surface of a polyethylene terephthalate (PET) film substrate to form a flexible polyurethane film coating, followed by plasma discharge treatment;
(2) coating a pressure-sensitive adhesive solution onto the surface of the flexible polyurethane film coating obtained in step (1) to form a pressure-sensitive adhesive layer;
(3) applying a flexible polyurethane coating solution onto the surface of another PET film substrate, drying to form a flexible polyurethane film coating, conducting plasma discharge treatment, and then combining it with the pressure-sensitive adhesive layer from step (2);
(4) peeling off the two PET film substrates, coating a layer containing thermal insulation nano-material on one side of the flexible polyurethane film coating, and baking-curing; coating a pressure-sensitive adhesive solution on the other side of the flexible polyurethane film coating;
in steps (1) and (3), the raw material formulation of the flexible polyurethane coating solution includes water-based polyurethane resin, carboxylic acid silane-modified nano silica, metal oxide nanoparticles, 8-mercapto-1-octanol, wetting agent, defoaming agent, and deionized water.

Wherein, the preferred pressure-sensitive adhesive solution is an acrylic pressure-sensitive adhesive.

In this invention, 8-mercapto-1-octanol can effectively enhance the dispersion of particles. The thiol group at the end of the molecular chain can modify nano silica and metal oxide nanoparticles, facilitating particle dispersion. The hydroxyl group at the other end of the molecular chain can participate in the curing reaction of water-based polyurethane resin, forming a spatial network structure. This not only ensures more uniform dispersion of particles in the polyurethane coating solution but also enhances the bonding and mechanical properties of the flexible polyurethane coating.

Among them, the preferred metal oxide nanoparticles are one or more of nano titanium dioxide, nano aluminum oxide, and nano zinc oxide.

The preferred wetting agent is dispersant SN-5040.

The preferred defoaming agent is defoamer CF-16.

The preferred water-based polyurethane resin is SYNTEGRA^{®} polyurethane dispersion from Dow or Bayhydrol^{®} polyurethane dispersion from Bayer.

The gas preferred for the plasma discharge treatment is nitrogen.

The preferred carboxylic acid silane is tetra(4-carboxyphenyl)silane.

The preferred carboxylic acid silane-modified nano silica is obtained by mixing silica sol with carboxylic acid silane in the solvent DMF, heating the reaction under vacuum-sealed conditions. The preferred temperature for the heating reaction is 90-100°C, and the preferred time is 20-30 hours.

In step (4), the preferred temperature for baking-curing is 70-120°C, and the preferred time is 1-8 minutes.

The present invention also provides a polyurethane multilayer film obtained by the above preparation method.

The polyurethane multilayer film of the present invention comprises, from bottom to top, a pressure-sensitive adhesive layer, a flexible polyurethane coating, a pressure-sensitive adhesive layer, a flexible polyurethane coating, and a thermal insulation nano-material layer.

Preferably, the thickness of the pressure-sensitive adhesive layer is 10-20 micrometers.

Preferably, the thickness of the flexible polyurethane coating is 20-50 micrometers.

Preferably, the thickness of the thermal insulation nano-material layer is 5-15 micrometers.

The above preferred conditions can be arbitrarily combined to achieve various preferred embodiments of the present invention, based on common knowledge in the field.

The reagents and raw materials used in the present invention are commercially available.

The positive and progressive effects achieved by the present invention include replacing the traditional TPU base film with a sandwich structure of flexible PU coating/pressure-sensitive adhesive/flexible PU coating to avoid the issue of poor leveling of TPU base films prepared by the extrusion method.

### Detailed Description of Exemplary Embodiments

The following are examples to further illustrate the present invention, but the invention is not limited to the scope of these examples. Experimental methods not specifically mentioned in the following examples are conducted using conventional methods and conditions or as per the product specifications.

Solvent Resistance Test Method: Spray 1ml of xylene onto the surface of the test material. Wipe it dry with a wiping paper after 30 seconds. If there is no obvious change in the appearance of the material (such as swelling, deformation, coating peeling, etc.), the solvent resistance test is considered qualified.

Self-healing Test Method: After brushing a scratch on the film surface with a straight steel wire brush, observe whether the scratch can automatically disappear within 1 hour or disappear under heat (such as pouring hot water). If it disappears, the material is considered to have self-healing capability.

Gloss Evaluation Method: Adhere the flexible polymer substrate coated with the self-healing coating onto a black metal plate. Observe the glossiness of the material surface from the front and side (45 degrees). If the surface is smooth and reflective with a clear and sharp reflection, the gloss is considered excellent; otherwise, it is considered poor.

Stain Resistance Evaluation Method: Mark the coating surface with a black oil-based marker. After allowing the mark to dry, wipe it directly with lens paper or wipe it with lens paper dipped in anhydrous alcohol after placing it for 1 day. Observe the removal of the mark. If the mark can be completely wiped off without leaving a trace, the stain resistance is considered excellent. If the mark cannot be wiped off, the stain resistance is considered poor. If the mark can be wiped off but leaves a small amount of residue, the stain resistance is considered good.

Tensile Elongation Test Method: Cut the test material into strips of 5 cm (length) and 2 cm (width). Mark the middle 2 cm length and stretch it until a crack appears. Measure the length (L1) of the marked part at this point. Calculate the tensile elongation using the formula: Tensile Elongation (%) = (L1-2)/2.

Weather Resistance Test Method: Use the Eye Super UV Tester W-151, Iwasaki Electric Co., Ltd., for weather resistance testing. One cycle consists of 5 hours at a temperature of 63°C, 50% relative humidity, light intensity of 50Mw/cm2, and rain exposure of 10 seconds per hour, followed by 1 hour at a temperature of 30°C and 95% relative humidity. After 300 cycles of this weather resistance cycle, observe the coating with the naked eye and under a microscope (×250). If no cracks or local peeling is observed, the coating surface is considered good, indicating good weather resistance.

All components in the formulation are given in parts by weight.

The pressure-sensitive adhesive layer uses a conventional pressure-sensitive adhesive formula in the field, including acrylic acid, methyl acrylate, lauryl oleate, 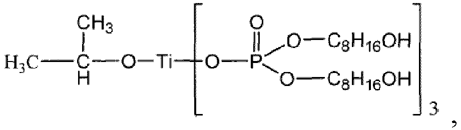 butadiene, and toluene.

The coating of the thermal insulation nano-material adopts a conventional thermal insulation coating in the field. The percentages in the following examples refer to parts by weight.

### Example 1

The steps for preparing the polyurethane multilayer film are as follows:
(1) apply the flexible polyurethane coating solution onto the surface of the polyethylene terephthalate (PET) film substrate, dry to form a flexible polyurethane film coating, and then subject it to plasma discharge treatment; the gas used for plasma discharge treatment is nitrogen, and the time is 10 minutes;
(2) coat an acrylic pressure-sensitive adhesive solution onto the surface of the flexible polyurethane film coating obtained in step (1) to form a pressure-sensitive adhesive layer;
(3) apply the flexible polyurethane coating solution onto the surface of another PET film substrate, dry to form a flexible polyurethane film coating, conduct plasma discharge treatment (the gas used for plasma discharge treatment is nitrogen, and the time is 10 minutes), and then laminate it with the pressure-sensitive adhesive layer from step (2);
(4) peel off the two PET film substrates, apply a coating containing thermal insulation nano-material on one side of the polyurethane film coating, and bake-cure (at 70°C for 8 minutes); apply an acrylic pressure-sensitive adhesive solution on the other side of the polyurethane film coating.

In this example, the raw material formulation of the flexible polyurethane coating solution includes the following weights: water-based polyurethane resin 20 parts, carboxylic acid silane-modified nano silica 10 parts, metal oxide nanoparticles 5 parts, 8-mercapto-1-octanol 3 parts, wetting agent 1 part, defoaming agent 1 part, deionized water 20 parts.

In this example, the metal oxide nanoparticles are nano titanium dioxide, the wetting agent is dispersant SN-5040, the defoaming agent is defoamer CF-16, and the water-based polyurethane resin is SYNTEGRA^{®} polyurethane dispersion from Dow.

The carboxylic acid silane-modified nano silica is obtained by mixing silica sol with tetra(4-carboxyphenyl)silane in the solvent DMF, heating the reaction under vacuum-sealed conditions. The temperature for the heating reaction is 90°C, and the time is 30 hours.

The polyurethane multilayer film obtained in this example includes, from bottom to top, a pressure-sensitive adhesive layer, a flexible polyurethane coating, a pressure-sensitive adhesive layer, a flexible polyurethane coating, and a thermal insulation nano-material layer. The thickness of the pressure-sensitive adhesive layer is 10 micrometers, the thickness of the flexible polyurethane coating is 20 micrometers, and the thickness of the thermal insulation nano-material layer is 5 micrometers.

The testing results are as follows:
(1) The adhesion of the polyurethane coating is good, not easily detached, achieving a 5B rating in cross-hatch adhesion test.
(2) Tensile elongation reaches 400%, and the tensile strength is 45 MPa.
(3) Scratch resistance is good, with no visible scratches after 1000 cycles of friction with a 0000# steel wire loaded with 1 kg.
(4) Excellent weather resistance, with no observed cracks or local peeling on the coating surface after 300 cycles of repeated weathering.
(5) The film is smooth with excellent leveling performance, and the glossiness at 20 degrees is 98.

### Example 2

The steps for preparing the polyurethane multilayer film are as follows:
(1) apply the flexible polyurethane coating solution onto the surface of the polyethylene terephthalate (PET) film substrate, dry to form a flexible polyurethane film coating, and then subject it to plasma discharge treatment; the gas used for plasma discharge treatment is nitrogen, and the time is 15 minutes;
(2) coat an acrylic pressure-sensitive adhesive solution onto the surface of the flexible polyurethane film coating obtained in step (1) to form a pressure-sensitive adhesive layer;
(3) apply the flexible polyurethane coating solution onto the surface of another PET film substrate, dry to form a flexible polyurethane film coating, conduct plasma discharge treatment (the gas used for plasma discharge treatment is nitrogen, and the time is 15 minutes), and then laminate it with the pressure-sensitive adhesive layer from step (2);
(4) peel off the two PET film substrates, apply a coating containing thermal insulation nano-material on one side of the polyurethane film coating, and bake-cure (at 100°C for 5 minutes); apply an acrylic pressure-sensitive adhesive solution on the other side of the polyurethane film coating.

In this example, the raw material formulation of the flexible polyurethane coating solution includes the following weights: water-based polyurethane resin 25 parts, carboxylic acid silane-modified nano silica 13 parts, metal oxide nanoparticles 7 parts, 8-mercapto-1-octanol 3 parts, wetting agent 1 part, defoaming agent 1 part, deionized water 30 parts.

In this example, the metal oxide nanoparticles are nano aluminum oxide, the wetting agent is dispersant SN-5040, the defoaming agent is defoamer CF-16, and the water-based polyurethane resin is Bayhydrol^{®} polyurethane dispersion from Bayer.

The carboxylic acid silane-modified nano silica is obtained by mixing silica sol with tetra(4-carboxyphenyl)silane in the solvent DMF, heating the reaction under vacuum-sealed conditions. The temperature for the heating reaction is 100°C, and the time is 25 hours.

The polyurethane multilayer film obtained in this example includes, from bottom to top, a pressure-sensitive adhesive layer, a flexible polyurethane coating, a pressure-sensitive adhesive layer, a flexible polyurethane coating, and a thermal insulation nano-material layer. The thickness of the pressure-sensitive adhesive layer is 20 micrometers, the thickness of the flexible polyurethane coating is 50 micrometers, and the thickness of the thermal insulation nano-material layer is 15 micrometers.

The testing results are as follows:
(1) The adhesion of the polyurethane coating is good, not easily detached, achieving a 5B rating in cross-hatch adhesion test.
(2) Tensile elongation reaches 400%, and the tensile strength is 46 MPa.
(3) Scratch resistance is good, with no visible scratches after 1000 cycles of friction with a 0000# steel wire loaded with 1 kg.
(4) Excellent weather resistance, with no observed cracks or local peeling on the coating surface after 300 cycles of repeated weathering.
(5) The film is smooth with excellent leveling performance, and the glossiness at 20 degrees is 99.

### Comparison Example 1

In this case, the raw material formulation of the flexible polyurethane coating solution does not include carboxylic acid silane-modified nano silica. Other parameters are the same as in Example 1, resulting in the polyurethane multilayer film. Testing its performance, visually, the film surface appears uneven, and the glossiness at 20 degrees is 81.

### Comparison Example 2

In this case, the raw material formulation of the flexible polyurethane coating solution replaces 8-mercapto-1-octanol with n-octanol. Other parameters are the same as in Example 1, resulting in the polyurethane multilayer film. Testing its performance, visually, the film surface appears uneven, and the glossiness at 20 degrees as well as the orange peel value is 85.

## Claims

1. A method of preparing a polyurethane multilayer film, comprising the following steps:
(1) applying a flexible polyurethane coating solution onto the surface of a polyethylene terephthalate film, drying to form a flexible polyurethane film coating, followed by plasma discharge treatment;
(2) coating a pressure-sensitive adhesive solution onto the surface of the flexible polyurethane film coating from step (1) to form a pressure-sensitive adhesive layer;
(3) applying a flexible polyurethane coating solution onto the surface of another polyethylene terephthalate film, drying to form a flexible polyurethane film coating, performing plasma discharge treatment, and then combining with the pressure-sensitive adhesive layer from step (2);
(4) peeling off the two polyethylene terephthalate film layers, coating one side of the flexible polyurethane film coating with a layer containing thermal insulation nanomaterial, and baking-curing; coating the other side of the flexible polyurethane film coating with a pressure-sensitive adhesive solution;
in steps (1) and (3), the raw material formulation of the flexible polyurethane coating solution includes: water-based polyurethane resin, carboxylic acid silane-modified nano silica, metal oxide nanoparticles, 8-mercapto-1-octanol, wetting agent, defoaming agent, and deionized water.

2. The preparation method according to claim 1, wherein said pressure-sensitive adhesive solution is an acrylic pressure-sensitive adhesive.

3. The preparation method according to claim 1, wherein said metal oxide nanoparticles are one or more of nano titanium dioxide, nano aluminum oxide, and nano zinc oxide.

4. The preparation method according to claim 1, wherein said wetting agent is a dispersant SN-5040; the defoaming agent is a defoaming agent CF-16; the water-based polyurethane resin is Dow's polyurethane dispersion SYNTEGRAO, or Bayer's polyurethane dispersion Bayhydrol^{®}.

5. The preparation method according to claim 1, wherein the gas used in said plasma discharge treatment is nitrogen.

6. The preparation method according to claim 1, wherein said carboxylic acid silane is tetra(4-carboxyphenyl)silane.

7. The preparation method according to claim 1, wherein said carboxylic acid silane-modified nano silica is obtained by mixing silica sol with tetra(4-carboxyphenyl)silane in DMF solvent, followed by heating under vacuum conditions; the preferred temperature for the heating reaction is 90-100°C, and the preferred time for the heating reaction is 20-30 hours.

8. The preparation method according to claim 1, wherein, in step (4), the preferred temperature for baking-curing is 70-120°C, and the preferred time is 1-8 minutes.

9. A polyurethane multilayer film prepared by the method according to any one of claims 1-8.

10. The polyurethane multilayer film according to claim 9, wherein said polyurethane multilayer film includes, from bottom to top, a pressure-sensitive adhesive layer, a flexible polyurethane coating layer, a pressure-sensitive adhesive layer, a flexible polyurethane coating layer, and a thermal insulation nanomaterial layer stacked together;
preferably, the thickness of the pressure-sensitive adhesive layer is 10-20 micrometers;
preferably, the thickness of the flexible polyurethane coating layer is 20-50 micrometers;
preferably, and the thickness of the thermal insulation nanomaterial layer is 5-15 micrometers.
